# EUROPEAN PATENT SPECIFICATION

(11) **EP 4 434 875 B1**
(45) Date of publication and mention of the grant of the patent: **29.04.2026**
(21) Application number: 24165281.7
(22) Date of filing: 21.03.2024
(51) Int. Cl.: B64C 1/20, B64D 9/00

(54) **LATCH SOLENOID ACTUATED FULLY AUTOMATIC AUXILIARY GUIDE ASSEMBLY**
VERRIEGELUNGSMAGNETBETÄTIGTE VOLLAUTOMATISCHE HILFSFÜHRUNGSANORDNUNG
ENSEMBLE DE GUIDAGE AUXILIAIRE ENTIÈREMENT AUTOMATIQUE ACTIONNÉ PAR SOLÉNOÏDE DE VERROUILLAGE

(30) Priority: 21.03.2023 IN 202341019370; 18.05.2023 US 202318319992
(43) Date of publication of application: 25.09.2024
(73) Proprietor: Goodrich Corporation, Charlotte, NC 28217-4578 (US)
(72) Inventor: PEREIRA, Elvis Jack, 560064 Bangalore (IN); ADAVALATH PUTHIYAVEETTIL, Sayooj, 560064 Bangalore (IN)
(74) Representative: Dehns

(56) References cited:
- CA-A- 1 138 831
- US-A- 3 927 622
- US-A- 4 415 298
- US-A1- 2021 046 860

## Description

### CROSS-REFERENCE TO RELATED APPLICATIONS

This application claims priority to, and the benefit of, India Patent Application No. 202341019370 (DAS CODE: 8CES), filed March 21, 2023, and titled "LATCH SOLENOID ACTUATED FULLY AUTOMATIC AUXILIARY GUIDE ASSEMBLY," and from US 18/319,992 filed 18 May 2023.

### FIELD

The present invention generally relates to cargo guide assemblies, and more specifically, to automatic auxiliary guide assemblies.

### BACKGROUND

Auxiliary guides are used in air cargo compartments with the cargo surface, such as a ball panel, near the cargo loading door of an aircraft. Auxiliary guides aid in guiding and stopping unit load devices (ULDs) in the cargo compartment. To accomplish this, auxiliary guides generally have two guiding surfaces in a longitudinal direction of the aircraft and two overriding surfaces in a lateral direction of the aircraft. The auxiliary guides are manually engaged and disengaged. A cargo handling system is disclosed in CA 1138831.

### SUMMARY

An auxiliary guide assembly is provided as defined by claim 1. Preferred embodiments are defined in the dependent claims.

The features and elements as well as the operation of the disclosed embodiments will become more apparent in light of the following description and accompanying drawings.

### BRIEF DESCRIPTION OF THE DRAWINGS

The subject matter of the present invention is particularly pointed out and distinctly claimed in the concluding portion of the specification. A more complete understanding of the present invention, however, may best be obtained by referring to the following detailed description and claims in connection with the following drawings. While the drawings illustrate various embodiments employing the principles described herein, the drawings do not limit the scope of the claims.
FIG. 1 illustrates a schematic of an aircraft being loaded with cargo, in accordance with various embodiments.
FIGS. 2A and 2B illustrate a cargo handling system including auxiliary guide assemblies, in accordance with various embodiments.
FIGS. 3A, 3B, 3C, and 3D illustrate a cargo handling system including an auxiliary guide assembly guiding a unit load device, in accordance with various embodiments.
FIGS. 4A, 4B, 4C, 4D, 4E, and 4F illustrate an auxiliary guide assembly, in accordance with various embodiments.
FIGS. 5A, 5B, and 5C illustrate the operation of an auxiliary guide assembly, in accordance with various embodiments.
FIG. 6 illustrates a system for controlling a plurality of auxiliary guide assemblies, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the invention, it should be understood that other embodiments may be realized and that changes may be made without departing from the scope of the invention, as defined by the appended claims. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural.

Disclosed herein is a fully automated auxiliary guide assembly. The auxiliary guide assembly includes a head having two guiding surfaces and two override surfaces in the lateral and axial directions. The head is coupled to a hub that supports a pinion and a solenoid assembly. In various embodiments, the solenoid assembly houses a solenoid, a reciprocating rod, an inner spring, a ring magnet, and an armature. In various embodiments, the head is configured to be rotationally coupled to the pinion. In various embodiments, the pinion is configured to engage a rack that is coupled to the reciprocating rod. In various embodiments, the armature is configured to move in a first direction, being attracted to the solenoid when the solenoid is powered by a first electric polarity, and held in place by the ring magnet. In various embodiments, the armature is configured to engage the reciprocating rod and move the reciprocating rod in a first direction, thereby rotating the pinion and the head to a closed position. In various embodiments, the solenoid, when powered by a second electric polarity that is different than the first electric polarity, moves the armature in a second direction that is opposite the first direction. In various embodiments, the reciprocating rod is able to move freely in the first direction and the second direction to raise and lower the head 212.

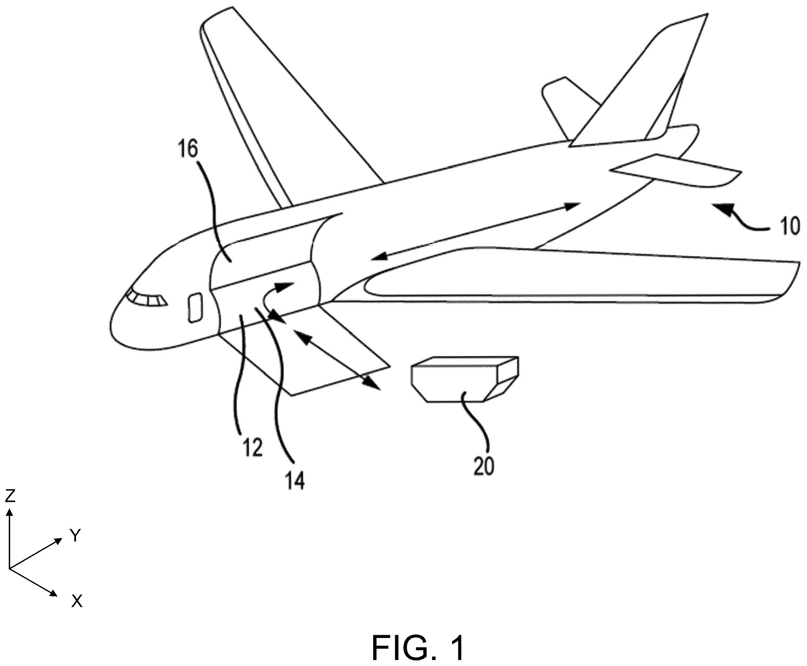

Referring now to FIG. 1, in accordance with various embodiments, a perspective view of an aircraft 10 is illustrated. Aircraft 10 includes a cargo deck 12 located within a cargo compartment 14. Aircraft 10 may comprise a cargo load door 16 located, for example, at one side of a fuselage structure of aircraft 10. A unit load device (ULD) 20, in the form of a container or pallet, for example, may be loaded through cargo load door 16 and onto cargo deck 12 of aircraft 10 or, conversely, unloaded from cargo deck 12 of aircraft 10. A "ULD", as used herein, includes a container, pallet, or other cargo of any size, shape, configuration, and/or type. In general, ULDs are available in various sizes and capacities, and are typically standardized in dimension and shape. Once loaded with items destined for shipment, ULD 20 is transferred to aircraft 10 and then loaded onto aircraft 10 through cargo load door 16 using a conveyor ramp, scissor lift or the like. As illustrated, ULD 20 is loaded laterally (e.g., the negative y-direction) into cargo compartment 14. Once inside aircraft 10, ULD 20 may be moved longitudinally (e.g., the x-direction) cargo compartment 14 to a final stowed position. Straps may be used to secure ULD 20 in the final stowed position to tend to minimize, or prevent, movement of ULD 20 during transport. Multiple ULDs may be brought on-board aircraft 10, with each ULD 20 being placed in a respective stowed position on cargo deck 12. One or more final ULDs 20 may be loaded laterally into cargo compartment 14 but not moved longitudinally within cargo compartment 14. After aircraft 10 has reached its destination, each ULD 20 is unloaded from aircraft 10 in similar fashion, but in reverse sequence to the loading procedure. To facilitate movement of ULD 20 along the cargo deck 12, aircraft 10 may include a cargo handling system as described herein in accordance with various embodiments.

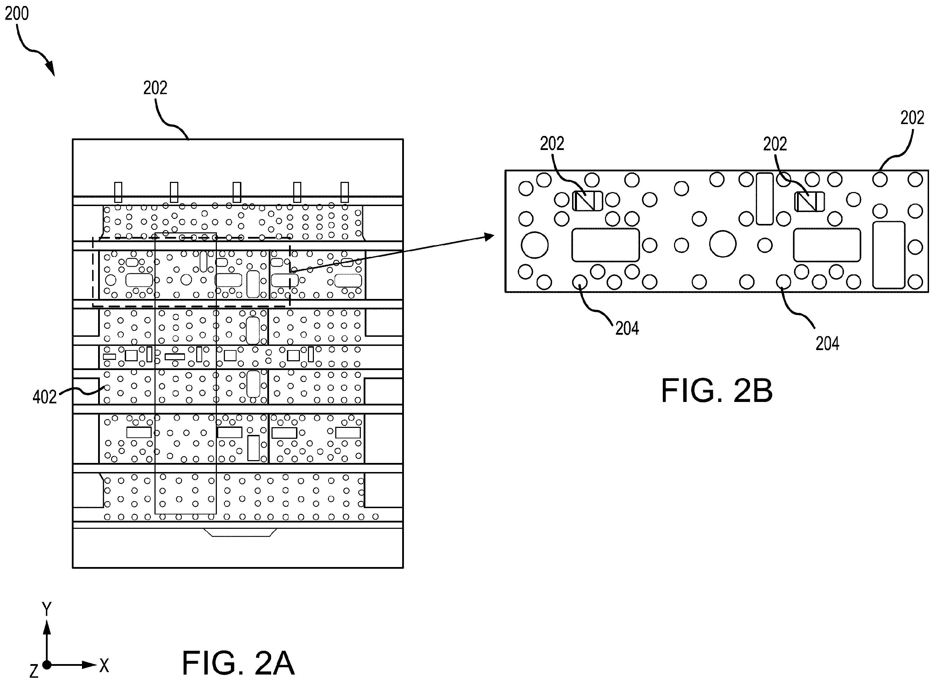

Referring now to FIGS. 2A-2B, in accordance with various embodiments, a cargo handling system 200 is illustrated. FIGS. 2A and 2B are a top-down views of cargo handling system 200. Cargo handling system 200 includes a ball panel 202 having a plurality of omni-directional rollers 204 and one or more auxiliary guide assemblies 206. Ball panel 202 may be located in cargo compartment 14, such as within the opening created by cargo load door 16. Ball panel 202 is configured to receive cargo (e.g., ULD 20) laterally within aircraft 10 (e.g., the negative x-direction) and move the cargo (e.g., ULD 20) longitudinally (e.g., the y-direction) within cargo compartment 14. Omni-directional roller 204 allows the cargo to move both laterally and longitudinally. That is, omni-directional roller 204 includes a ball that rotates as the cargo moves over top of the ball. In various embodiments, cargo handling system 200 may further include one or more power drive units (PDUs) configured to move the cargo along ball panel 202. For example, one or more PDUs may be configured to move the cargo laterally along ball panel 202 and one or more different PDUs may be configured to move the cargo longitudinally over ball panel 202.

Auxiliary guide assembly 206 is disposed in ball panel 202 and is configured to guide the cargo (e.g., ULD 20) as moves with cargo compartment 14. Auxiliary guide assembly 206 is configured to retract into (e.g., in the negative z-direction) ball panel 202 and extend out of (e.g., in the positive z-direction) ball panel 202. Auxiliary guide assembly 206 may fully retract into ball panel 202 in response to a first force (e.g., worker pushing down) and be locked in the retracted position. Auxiliary guide assembly 206 includes a locking mechanism that secures auxiliary guide assembly 206 in the fully retracted position until the locking mechanism is disengaged. In addition or in the alternative, auxiliary guide assembly 206 may partially retract into ball panel 202 in response to a second force (e.g., ULD 20) such that it automatically extends above ball panel 202 after the force is removed. Auxiliary guide assembly 206 includes springs configured to extend auxiliary guide assembly 206 above ball panel 202 from the partially retracted state in the absence of the second force. That is, auxiliary guide assembly 206 is generally extended out of ball panel 202. Auxiliary guide assembly 206 includes two guiding surfaces and two overriding surfaces. A first guiding surface is configured to prevent movement of the cargo in a first direction (e.g., the positive x-direction) and guide the cargo longitudinally (e.g., along the y-axis) within cargo compartment 14. A second guiding surface is configured to prevent movement of the cargo in a second direction (e.g., the positive y-direction) and guide the cargo laterally (e.g., along the x-axis) within cargo compartment. A first override surface is configured to partially retract auxiliary guide assembly 206 in response to the cargo moving in a third direction (e.g., the negative y-direction). A second override surface is configured to partially retract auxiliary guide assembly 206 in response to the cargo moving in a fourth direction (e.g., the negative x-direction).

As illustrated in FIGS. 2A and 2B, ball panel 202 is configured to receive the cargo from the right side (e.g., the positive x-direction) into cargo compartment 14. The cargo moves into cargo compartment 14 in the fourth direction (e.g., laterally, in the negative x-direction) and engages first override surface of auxiliary guide assembly 206. Auxiliary guide assembly 206 partially retracts into ball panel 202 in response to the cargo engaging first override surface. Auxiliary guide assembly 206 extends out of ball panel 202 after the cargo is passed, allowing auxiliary guide assembly 206 to guide the cargo longitudinally (e.g., along the y-axis) should the cargo engage the first guiding surface of auxiliary guide assembly.

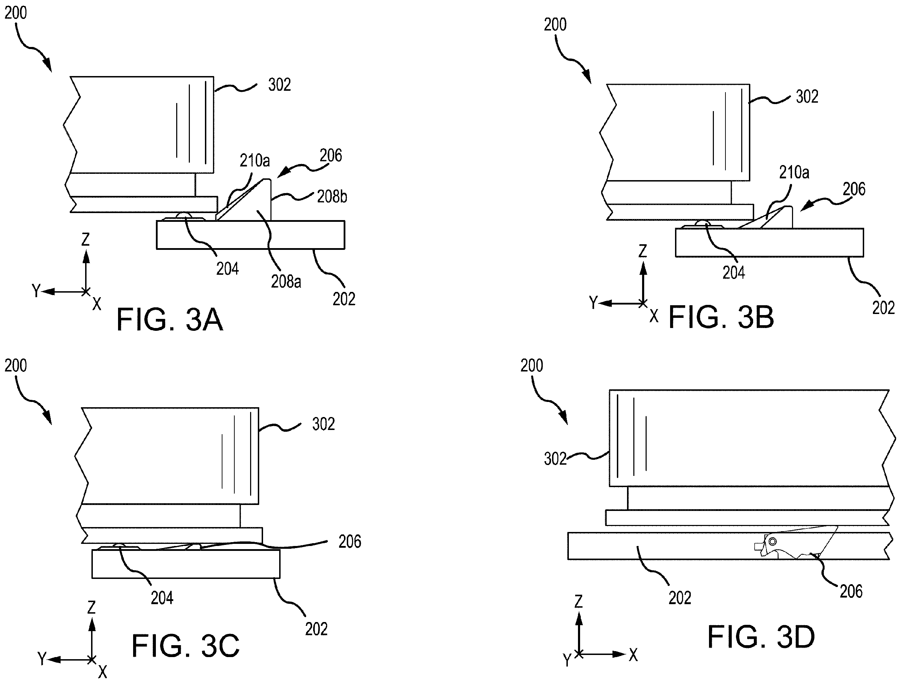

Referring now to FIGS. 3A-3D, a cargo handling system 200 including an auxiliary guide assembly 206 guiding a piece of cargo 302 is illustrated, in accordance with various embodiments. In various embodiments, cargo 302 may be a unit load device (ULD) such as ULD 20 described above with respect to FIG. 1. In various embodiments, cargo 302 may be a pallet or other type of cargo. As described above, auxiliary guide assembly 206 includes a first guiding surface 208a, a second guiding surface 208b, a first override surface 210a, and a second overriding surface. First guiding surface 208a is configured to guide prevent cargo 302 from moving in the first direction (e.g., the positive x-direction) and guide cargo 302 longitudinally (e.g., along the y-axis) within an aircraft (e.g., aircraft 10). Second guiding surface 208b is configured to prevent cargo 302 from moving in the second direction (e.g., the positive y-direction) and guide cargo 302 laterally (e.g., along the x-axis) within the aircraft. first override surface 210a is configured to allow cargo 302 to move in the third direction (e.g., the negative y-direction) by partially retracting auxiliary guide assembly (e.g., in the negative z-direction) into ball panel 202 in response to cargo 302 engaging first override surface in the third direction. Second override surface is configured to allow cargo 302 to move in the fourth direction (e.g., the negative x-direction) by partially retracting auxiliary guide assembly into ball panel 202 in response to cargo 302 engaging second override surface in the fourth direction.

FIG. 3A illustrates cargo 302 engaging first override surface 210a in the third direction (e.g., the negative y-direction). Cargo 302 rolls over omni-directional roller 204 and engages first override surface 210a of auxiliary guide assembly 206. first override surface 210a has an upward extending slope (e.g., in the positive z-direction) in the longitudinal direction (e.g., in the negative y-direction) that allows cargo 302 to move onto first override surface 210a that causes auxiliary guide assembly 206 to partially retract into ball panel 202. FIG. 3B illustrates cargo 302 moving onto first override surface 210a with auxiliary guide assembly 206 retracting into ball panel 202. FIG. 3C illustrates cargo 302 over top of auxiliary guide assembly 206 that is partially retracted into ball panel 202. FIG. 3D illustrated different view of auxiliary guide assembly partially retracted into ball panel 202.

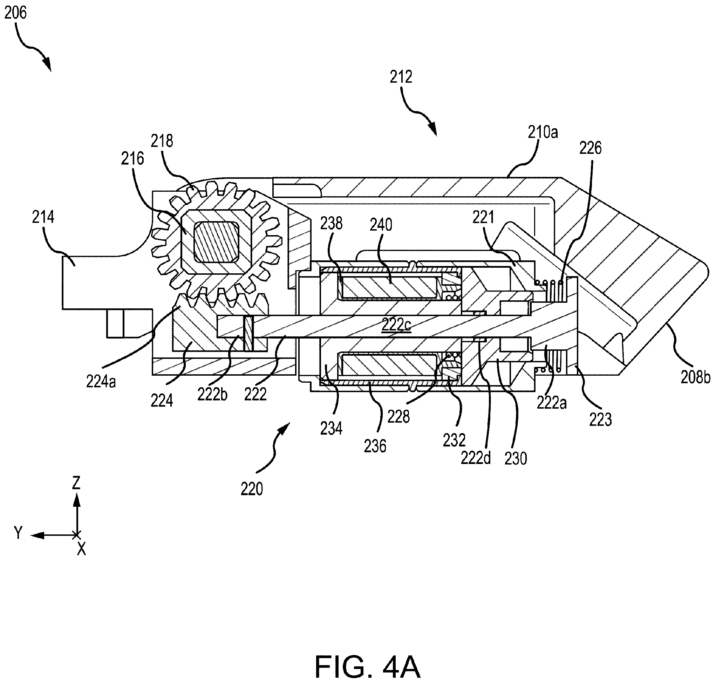

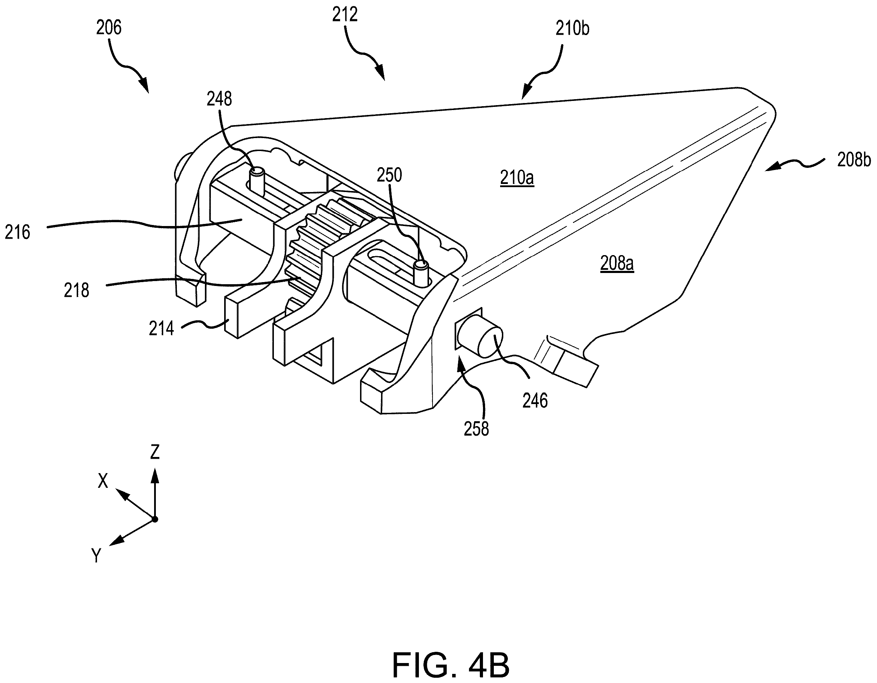

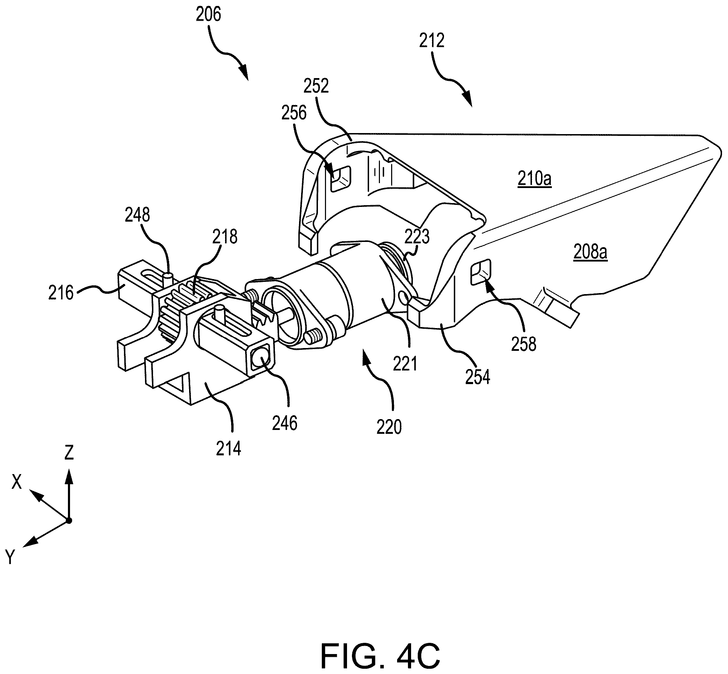

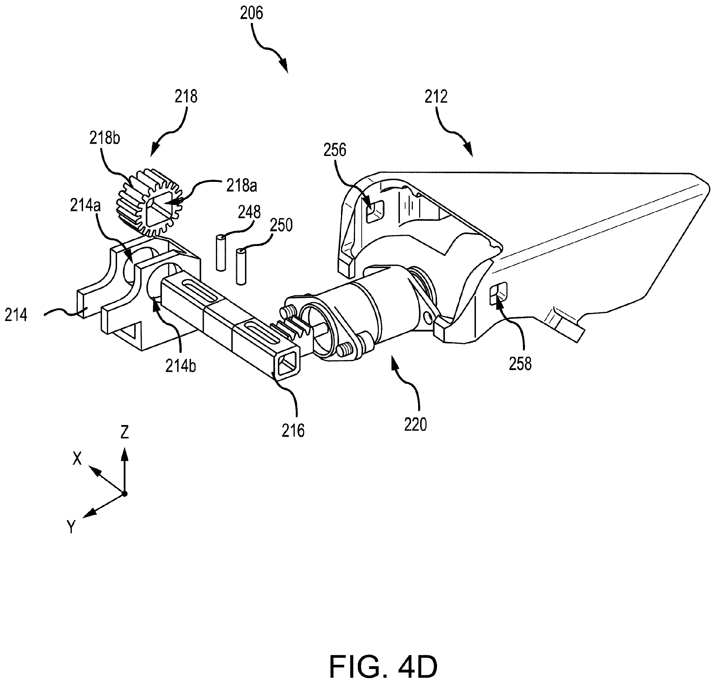

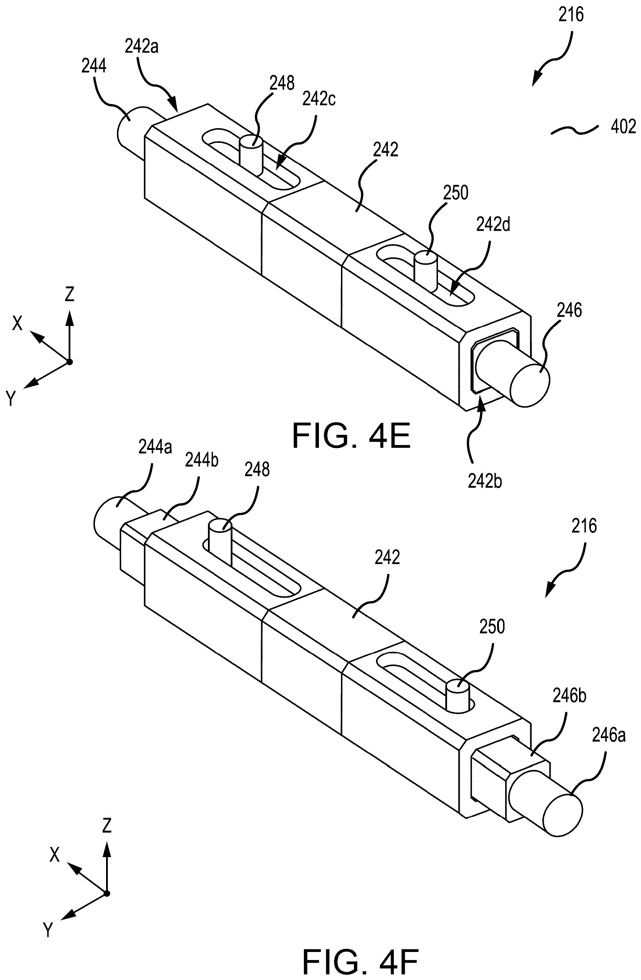

Referring now to FIGS. 4A-4F, an auxiliary guide assembly 206 is illustrated, in accordance with various embodiments. FIG. 4A is a cross section of auxiliary guide assembly 206. FIG. 4B is a perspective view of auxiliary guide assembly 206. FIGS. 4C and 4D are exploded perspective views of the components of auxiliary guide assembly 206. FIGS. 4E and 4F are perspective views of a union assembly that is a component in auxiliary guide assembly 206. Auxiliary guide assembly 206 includes a head 212, a hub 214, a union unit 216, a pinion 218 (aka gear), and a reciprocating latch solenoid 220.

Head 212 includes first guiding surface 208a, second guiding surface 208b, first override surface 210a, second override surface 210b, a first leg 252, a second leg 254, a first opening 256, and a second opening 258. First leg 252 extends in the third direction (e.g., the negative y-direction) from first guiding surface 208a and second leg 254 extends in the third direction from second override surface 210b. First opening 256 is formed in first leg 252 and second opening 258 is formed in second leg 254. In various embodiments, first opening 256 is in line with second opening 258 (e.g., along the x-axis). Head 212 is coupled to hub 214 and is configured to rotate (e.g., clockwise and anti-clockwise) with respect to the hub 214.

Hub 214 has a first opening 214a and a second opening 214b formed therethrough (as illustrated in FIG. 4D). In various embodiments, first opening 214a and/or second opening 214b may be circular in shape. Pinion 218 includes an opening 218a formed therethrough and gear teeth 218b located around an outer circumference. In various embodiments, opening 218a may be rectangular in shape. Hub 214 is configured to receive pinion 218 between first opening 214a and second opening 214b so that first opening 214a, opening 218a, and second opening 214b are inline. Union unit 216 is configured to slide through first opening 214a, opening 218a, and second opening 214b, securing pinion 218 to hub 214. Pinion 218, and more specifically, opening 218a is configured to engage union unit 216 to rotate union unit 216 in response to pinion 218 rotating.

Union unit 216 includes a body 242, a first lock pin 244, a second lock pin 246, a first slot pin 248, and a second slot pin 250. Body 242 has an axial length (e.g., along the x-axis) having a first opening 242a at a first axial end and a second opening 242b at a second axial end. Body 242 further includes a third opening 242c and a fourth opening 242d along a side of body 242. First lock pin 244 is configured to be inserted into first opening 242a of body 242 and second lock pin 246 is configured to be inserted into second opening 242b of body 242. First lock pin 244 includes a first portion 244a and a second portion 244b with second portion 244b being proximate body 242 and first portion 244a being distal body 242. In various embodiments, first portion 244a has a circular cross section. In various embodiments, second portion 244b has a rectangular cross section. Second lock pin 246 includes a first portion 246a and a second portion 246b with second portion 246b being proximate body 242 and first portion 246a being distal body 242. In various embodiments, first portion 246a has a circular cross section. In various embodiments, second portion 246b has a rectangular cross section.

In various embodiments, a first spring may be located in first opening 242a between first lock pin 244 and body 242. The first spring provides an outward force (e.g., in the positive x-direction) on first lock pin 244. In various embodiments, a second spring may be located in second opening 242b between second lock pin 246 and body 242. The second spring provides an outward force (e.g., in the negative x-direction) on second lock pin 246. First lock pin 244 is configured to receive first slot pin 248. First slot pin 248 may be inserted through third opening 242c into second portion 244b of first lock pin 244. First slot pin 248 retains first lock pin 244 in first opening 242a (as illustrated in FIG. 4F). Second lock pin 246 is configured to receive second slot pin 250. Second slot pin 250 may be inserted through fourth opening 242d into second portion 246b of second lock pin 246. Second slot pin 250 retains second lock pin 246 in second opening 242b (as illustrated in FIG. 4F).

Union unit 216 secures pinion 218 to hub 214, hub 214 to head 212, and auxiliary guide assembly 206 to ball panel 202 (as illustrated in FIG. 4B). Union unit 216 extends through first opening 214a of hub 214, opening 218a of pinion 218, and second opening 214b of hub 214 securing union unit 216 to hub 214. Pinion 218 engages union unit 216 so that pinion 218 is rotationally coupled to union unit 216. First lock pin 244 extends through first opening 256 of head 212 and second lock pin 246 extends through second opening 258 of head 212. When installed, second portion 244b of first lock pin 244 engages first opening 256 and second portion 246b of second lock pin 246 engages second opening 258 so that union unit 216 and head 212 are rotationally coupled. That is, union unit 216 and head 212 rotate in response to pinion 218 rotating. When installed, first portion 244a of first lock pin 244 and first portion 246a of second lock pin 246 engage ball panel 202, securing auxiliary guide assembly 206 to ball panel 202.

When auxiliary guide assembly 206 is installed in ball panel 202, first lock pin 244 and second lock pin 246 are fully extended with first portion 244a and first portion 246a engaging ball panel 202 and second portion 244b and second portion 246b engaging head 212. First slot pin 248 and second slot pin 250 are in corresponding positions, furthest from a center of body 242 (as illustrated in FIGS. 4B and 4F). Moving first slot pin 248 and second slot pin 250 inward (e.g., in the negative x-direction and the positive x-direction, respectively) retracts first lock pin 244 and second lock pin 246, respectively (as illustrated in FIG. 4E). In this position, second portion 244b and second portion 246b are retracted into body 242 and first portion 244a and first portion 246a are retracted from ball panel 202, allowing auxiliary guide assembly 206 to be removed from ball panel 202. Moving first slot pin 248 and second slot pin 250 further inward retracts first lock pin 244 and second lock pin 246 fully into body 242 (as illustrated in FIG. 4C). In this position, head 212 may be removed from auxiliary guide assembly 206.

Reciprocating latch solenoid 220 provides a motive force to rotate pinion 218, and in response, rotate union unit 216 and head 212. In various embodiments, reciprocating latch solenoid 220 provides a linear force that is converted to a rotational force by pinion 218. Reciprocating latch solenoid 220 includes a housing 221, a reciprocating rod 222, a rod head 223, a rack 224, an outer spring 226, an inner spring 228, an armature 230, a ring magnet 232, an inner static core 234, an outer static core 236, a spool 238, and a wire 240 that is wound around spool 238. Housing 221 encloses the components of solenoid 220, provides mounting features, and environmental protection for solenoid 220.

Reciprocating rod 222 extends through housing 221 and moves back and forth (e.g., along the y-axis) with respect to housing 221. Reciprocating rod 222 includes a first end 222a extending out a first end of housing 221, a second end 222b extending out a second end of housing 221, a shaft 222c extending from first end 222a to second end 222b, and tabs 222d along shaft 222c. Rod head 223 is coupled to first end 222a of reciprocating rod 222 and has a larger diameter than shaft 222c, preventing rod head 223 from entering housing 221. Second end 222b of reciprocating rod 222 is coupled to rack 224. Rack 224 includes gear teeth 224a that are configured to engage gear teeth 218b of pinion 218. The lateral back and forth movement of reciprocating rod 222 is converted to rotational movement of head 212 by rack 224 and pinion 218.

Inner static core 234, outer static core 236, spool 238, and wire 240 form the electrical components of solenoid 220. Spool 238 is located within housing 221 and between inner static core 234 and outer static core 236. Wire 240 is wound around spool 238 and is connected to an electric source. In various embodiments, the electric source may be cargo handling system 200. In various embodiments, the electric source may be aircraft 10. In various embodiments, the electric source may be a battery. Wire 240 generates a magnetic flux in response to receiving an electric current from electric power source. In other words, in response to solenoid 220 being energized (e.g., by an electric current), solenoid generates the magnetic flux. Inner static core 234 and outer static core 236 provide a path for the magnetic flux.

Outer spring 226 is located between housing 221 and first end 222a of reciprocating rod 222 with reciprocating rod 222 extending through outer spring 226. Outer spring 226 exerts a first force on reciprocating rod 222, and more specifically, on first end 222a to translate reciprocating rod away from housing 221 (e.g., in the negative y-direction).

Armature 230 is configured to move between an engaged position and a disengaged position. Armature 230 moves to the engaged position (e.g., in the positive y-direction) in response to solenoid 220 being engaged. Inner spring 228 is located inside housing 221 and between armature 230 on one side and inner static core 234 and outer static core 236 on the other side. Inner spring 228 exerts a second force on armature 230 to translate armature 230 to the disengaged position, away from inner static core 234 and outer static core 236 (e.g., in the negative y-direction).

Ring magnet 232 is located between inner static core 234 and outer static core 236 and adjacent armature 230. Ring magnet 232 is configured to hold armature 230 in the engaged position after solenoid 220 is disengaged. That is, in response to solenoid 220 being disengaged, ring magnet 232 exerts a third force (e.g., in the positive y-direction) on armature 230 that is stronger than the second force exerted by inner spring 228 on armature 230. Solenoid 220 creates a first magnetic flux that complements the third force of ring magnet 232 in response to a first electric current having a first polarity being applied. Solenoid 220 creates a second magnetic flux that is opposite the first magnetic flux and opposite the third force of ring magnet 232 in response to a second electric current having a second polarity that is opposite the first polarity being applied.

Reciprocating rod 222 extends through armature 230 and tabs 222d of reciprocating rod 222 are located between a portion of armature 230 and inner static core 234 and outer static core 236. Armature 230 is configured to engage tabs 222d to move reciprocating rod 222 inward (e.g., in the positive y-direction) but not outward (e.g., in the negative y-direction).

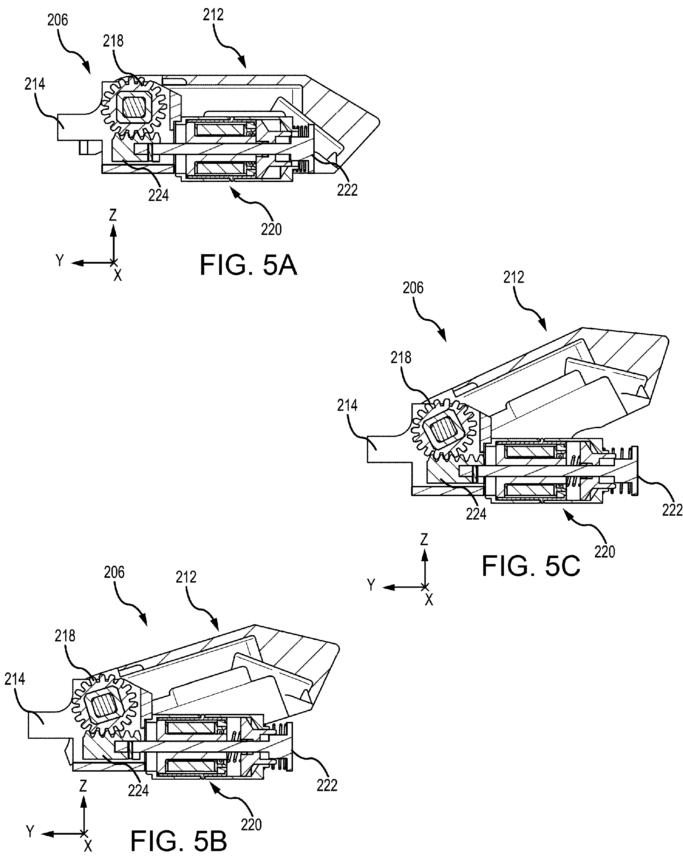

Referring now to FIGS. 5A-5C, three states of auxiliary guide assembly 206 are illustrated, in accordance with various embodiments. FIG. 5A illustrates auxiliary guide assembly 206 in a locked down state. FIG. 5B illustrated auxiliary guide assembly 206 in an up position. FIG. 5C illustrates auxiliary guide assembly 206 in an overriding position. Auxiliary guide assembly 206 includes all the components previously discussed above, including head 212, hub 214, union unit 216, pinion 218, solenoid 220, reciprocating rod 222, outer spring 226, inner spring 228, armature 230, and ring magnet 232.

Referring first to FIG. 5A, auxiliary guide assembly 206 is locked in the disengaged, down, or fully retracted position. Armature 230 is in the engaged position (e.g., moved in the positive y-direction) and securing reciprocating rod 222 in place by engaging tabs 222d. That is, armature 230 prevents reciprocating rod 222 from translating to the right (e.g., in the negative y-direction) which prevents pinion 218 and head 212 from rotating. In various embodiments, ring magnet 232 hold armature 230 in the engage position and auxiliary guide assembly 206 in the disengaged position without the aid of solenoid 220. In various embodiments, solenoid 220 is engaged, receiving a first electric current having a first polarity that augments ring magnet 232 and attracts armature 230.

Referring next to FIG. 5B, auxiliary guide assembly 206 is in the up, engaged, or guiding, position. Solenoid 220 is disengaged (i.e., not receiving an electric current) when auxiliary guide assembly 206 is in the up position. Solenoid 220 is engaged, receiving a second current having a second polarity that is opposite the first polarity to repel armature 230 to the right (e.g., the negative y-direction) to the disengaged position allowing head 212 to extend upward (e.g., in the positive z-direction). In various embodiments, inner spring 228 may aid in repelling armature 230. Solenoid 220 may then be disengaged, allowing reciprocating rod 222 to translate back and forth (e.g., along the y-axis). In this position, auxiliary guide assembly 206 may guide cargo (e.g., ULD 20) along a ball panel (e.g., ball panel 202).

Referring last to FIG. 5C, auxiliary guide assembly 206 is in the overriding, or partially retracted, position. In this position, cargo (e.g., ULD 20) is overriding, or moving over top of, auxiliary guide assembly 206. As the cargo moves over auxiliary guide assembly 206, and more specifically, over head 212, head 212 rotates downward (e.g., in the negative z-direction). Pinion 218 rotates clockwise in response to head 212 rotating downward which in turn causes rack 224 to translate to the left (e.g., the positive y-direction). The force of the cargo on head 212 overcomes the force exerted by outer spring 226 allowing reciprocating rod 222 to translate to the left (e.g., the positive x direction). After the cargo disengages with head 212, outer spring 226 pushes reciprocating rod 222, including rack 224, to the right (e.g., the negative y-direction). Pinion 218 rotates anti-clockwise in response to rack 224 moving thereby causing head 212 to raise up (e.g., in the positive z-direction).

As described herein, auxiliary guide assembly 206 may be raised and lowered remotely and without user intervention. This reduces the amount of workload by allowing a user to engage and disengage all auxiliary guide assemblies 206, either individually or collectively, at the same time. In various embodiments, power to auxiliary guide assembly 206 may be cut while auxiliary guide assembly 206 is in the disengaged, or down, position. In various embodiments, a tool may be used to engage pinion 218 and rotate pinion 218 thereby applying a force on rack 224 and reciprocating rod 222 to force armature 230 to move to the disengaged position (e.g., in the negative y-direction). That is, the force applied to pinion 218 by the tool may be sufficient to overcome ring magnet 232, thereby unlocking auxiliary guide assembly 206 for use.

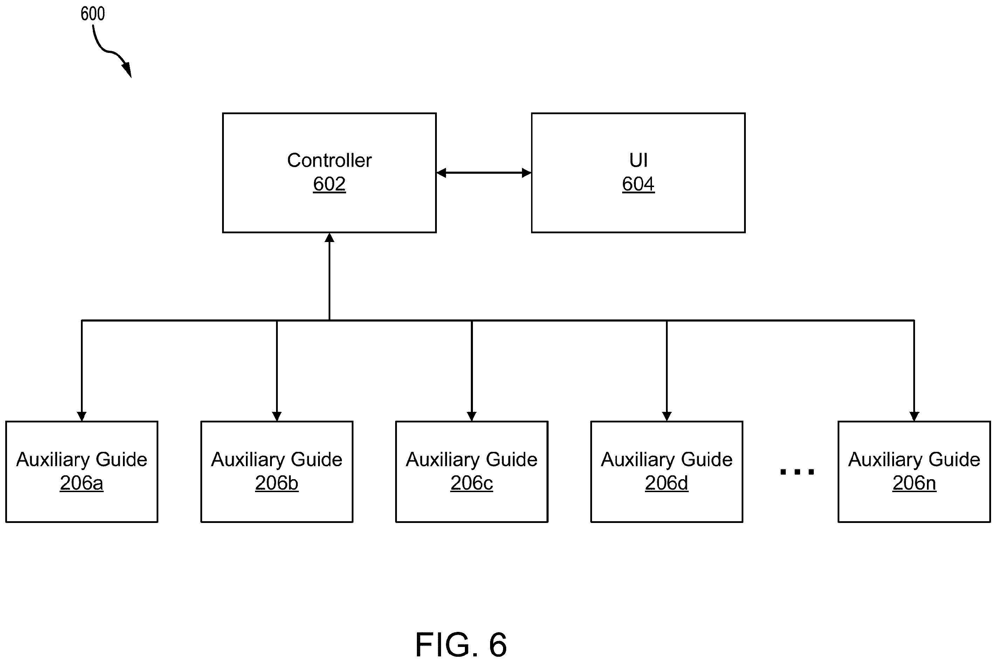

Referring to FIG. 6, a system 600 for controlling a plurality of auxiliary guide assemblies 206 is illustrated, in accordance with various embodiments. System 600 includes a controller 602, a user interface (UI) 604, and a plurality of auxiliary guide assemblies 206a, 206b, 206c, 206d, ..., 206n, collectively referred to herein as auxiliary guide assemblies 206. In various embodiments, UI 604 may be a central computer running a program to control a cargo handling system (e.g., cargo handling system 200), including the plurality of auxiliary guide assemblies 206. In various embodiments, UI 604 may be a tablet, a phone, or a remote control, among other interfaces, for controlling the plurality of auxiliary guide assemblies 206 in the cargo handling system.

Controller 602 may be operatively coupled to UI 604 and to the plurality of auxiliary guide assemblies 206. In various embodiments, controller 602 may be connected to UI 604 and/or the plurality of auxiliary guide assemblies 206 via a wired connections such as ethernet, coaxial cable, universal serial bus (USB), serial (e.g., RS-232), controller area network (CAN) bus, or inter-integrated circuit (I2C) protocol, among others. In various embodiments, controller 602 may be connected to UI 604 and/or the plurality of auxiliary guide assemblies 206 by a wireless connection such as Wi-Fi, Bluetooth, Zigbee, Z-wave, or radio frequency (RF), among others.

In various embodiments, controller 602 may receive instructions from UI 604 for the plurality of auxiliary guide assemblies 206. In various embodiments, controller 602 may receive status from the plurality of auxiliary guide assemblies 206 to send to UI 604. In various embodiments, controller 602 may individually control each auxiliary guide assembly 206a, 206b, 206c, 206d, ..., 206n. In various embodiments, controller 602 may collectively control (e.g., all at once) all the plurality of auxiliary guide assemblies 206.

Controller 602 may be configured to receive an instruction from UI 604 to engage one or more of the plurality of auxiliary guide assemblies 206 and send a signal to engage (e.g., solenoid 220) each of the one or more auxiliary guide assemblies 206. Controller 602 may further be configured to receive an instruction from UI 604 to disengage one or more of the plurality of auxiliary guide assemblies 206 and send a signal to disengage (e.g., solenoid 220) each of the one or more auxiliary guide assemblies 206. Controller 602 may be further configured to receive a status from one or more of the plurality of auxiliary guide assemblies 206 indicating the current state of each of the plurality of auxiliary guide assemblies 206. In various embodiments, each of auxiliary guide assemblies 206 may be in a fully retracted state, an operational state with the solenoid engaged, and an operational state with the solenoid disengaged, among others.

Controller 602 may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. Controller 602 may further comprise memory to store data, executable instructions, system program instructions, and/or controller instructions to implement the control logic of controller 602.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

Numbers, percentages, or other values stated herein are intended to include that value, and also other values that are about or approximately equal to the stated value, as would be appreciated by one of ordinary skill in the art encompassed by various embodiments of the present invention. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Although various embodiments have been disclosed and described, one of ordinary skill in this art would recognize that certain modifications would come within the scope of the invention as defined by the claims.

## Claims

1. An auxiliary guide assembly for a cargo surface of an air cargo compartment, the auxiliary guide assembly comprising:
a head (212) including a guiding surface (208a, 208b) and an overriding surface;
a pinion (218);
a hub (214) configured to receive the pinion;
a union unit (216) configured to secure the pinion to the hub, the union unit rotationally coupled to the pinion and the head;
a solenoid (220) coupled to the hub, the solenoid configured to receive a first electric polarity;
a reciprocating rod (222) disposed through the solenoid, the reciprocating rod having a first rod end including a rack (224) operatively coupled to the pinion; and
an armature (230) disposed adjacent the solenoid and configured to engage the reciprocating rod, wherein the armature is configured to move in a first direction in response to the solenoid receiving the first electric polarity, the armature moving the reciprocating rod in the first direction, and the head is configured to rotate in a second direction in response to the reciprocating rod moving in the first direction.

2. The auxiliary guide assembly of claim 1, wherein the solenoid (220) is further configured to receive a second electric polarity that is opposite the first electric polarity, wherein the armature (230) is configured to move in a third direction that is opposite the first direction in response to the solenoid receiving the second electric polarity, and the head (212) is configured to rotate in a fourth direction in response to the armature moving in the second direction, the fourth direction being opposite the second direction.

3. The auxiliary guide assembly of claim 1 or 2, further comprising:
an inner spring (228) disposed between the armature and the solenoid, the inner spring configured to move the armature in a third direction that is opposite the first direction; and
a ring magnet (232) configured to hold the armature in first position.

4. The auxiliary guide assembly of any preceding claim, further comprising:
a first opening (256) in the head having a first rectangular cross section;
a second opening (258) in the hub having a circular cross section; and
a third opening in the pinion having a second rectangular cross section, the union unit disposed through the first opening, the second opening, and the third opening.

5. The auxiliary guide assembly of any preceding claim, further comprising:
a rod head (223) disposed at a second rod end of the reciprocating rod that is opposite the first rod end; and
an outer spring (226) disposed between the rod head and the armature, wherein the outer spring is configured to move the rod head in a third direction that is opposite the first direction.

6. The auxiliary guide assembly of any preceding claim, the union unit further comprising:
a body (242) having a first end, a second end, and a first side extending from the first end to the second end;
a first opening (242a) in the first end;
a second opening (242b) in the second end;
a first lock pin (244) disposed in the first opening; and
a second lock pin (246) disposed in the second opening, wherein the first lock pin and the second lock pin are configured to engage the head; and optionally
wherein the first lock pin (244) has a first portion and a second portion, the first portion having a circular cross section and the second portion having a rectangular cross section.

7. A cargo handling system, comprising:
a ball panel (202) for moving and storing cargo, the ball panel having a top surface; and an auxiliary guide assembly (206) as claimed in any of claims 2-6 disposed within the ball panel, wherein the head (212) is configured to raise above and retract below the top surface when rotated in the second and fourth directions.

8. A cargo handling system according to claim 7, further comprising:
a user interface (604);
a processor operatively connected to the first auxiliary guide assembly and to the user interface; and
a memory operatively coupled to the processor, the memory comprising instructions stored thereon that, when executed by the processor, cause the processor to:
receive a first instruction from the user interface; and
send a first electric polarity to the first auxiliary guide assembly in response to the first instruction, the head raising above the top surface in response to the first electric polarity.

9. The system of claim 8, wherein the instructions, when executed by the processor, further cause the processor to:
receive a second instruction from the user interface; and
send a second electric polarity to the first auxiliary guide assembly in response to the second instruction, the head retracting below the top surface in response to the second electric polarity, the second electric polarity being opposite the first electric polarity.

## Patentansprüche

1. Hilfsführungsanordnung für eine Frachtoberfläche eines Luftfrachtabteils, wobei die Hilfsführungsanordnung Folgendes umfasst:
einen Kopf (212), der eine Führungsoberfläche (208a, 208b) und eine Überlagerungsoberfläche beinhaltet;
ein Ritzel (218);
eine Nabe (214), die dazu konfiguriert ist, das Ritzel zu empfangen;
eine Verbindungseinheit (216), die dazu konfiguriert ist, das Ritzel an der Nabe zu befestigen, wobei die Verbindungseinheit drehbar mit dem Ritzel und dem Kopf gekoppelt ist;
einen Magneten (220), der mit der Nabe gekoppelt ist, wobei der Magnet dazu konfiguriert ist, eine erste elektrische Polarität zu empfangen;
eine hin- und hergehende Stange (222), die durch den Magneten hindurch angeordnet ist, wobei die hin- und hergehende Stange ein erstes Stangenende aufweist, das einen Träger (224) beinhaltet, der betriebsmäßig mit dem Ritzel gekoppelt ist; und
einen Anker (230), der mit dem Magneten benachbart angeordnet und dazu konfiguriert ist, mit der hin- und hergehenden Stange in Eingriff zu kommen, wobei der Anker dazu konfiguriert ist,
sich als Reaktion darauf, dass der Magnet die erste elektrische Polarität empfängt, in eine erste Richtung zu bewegen, wobei der Anker die hin- und hergehende Stange in die erste Richtung bewegt, und der Kopf dazu konfiguriert ist, sich als Reaktion darauf, dass sich die hin- und hergehende Stange in die erste Richtung bewegt, in eine zweite Richtung zu drehen.

2. Hilfsführungsanordnung nach Anspruch 1, wobei der Magnet (220) ferner dazu konfiguriert ist, eine zweite elektrische Polarität zu empfangen, die der ersten elektrischen Polarität entgegengesetzt ist, wobei der Anker (230) dazu konfiguriert ist, sich als Reaktion darauf, dass der Magnet die zweite elektrische Polarität empfängt, in eine dritte Richtung zu bewegen, die der ersten Richtung entgegengesetzt ist, und der Kopf (212) dazu konfiguriert ist, sich als Reaktion darauf, dass sich der Anker in die zweite Richtung bewegt, in eine vierte Richtung zu drehen, wobei die vierte Richtung der zweiten Richtung entgegengesetzt ist.

3. Hilfsführungsanordnung nach Anspruch 1 oder 2, ferner umfassend:
eine innere Feder (228), die zwischen dem Anker und dem Magneten angeordnet ist, wobei die innere Feder dazu konfiguriert ist,
den Anker in eine dritte Richtung zu bewegen, die der ersten Richtung entgegengesetzt ist; und
einen Ringmagneten (232), der dazu konfiguriert ist, den Anker in einer ersten Position zu halten.

4. Hilfsführungsanordnung nach einem der vorhergehenden Ansprüche, ferner umfassend:
eine erste Öffnung (256) in dem Kopf, die einen ersten rechteckigen Querteilabschnitt aufweist;
eine zweite Öffnung (258) in der Nabe, die einen kreisförmigen Querteilabschnitt aufweist; und
eine dritte Öffnung in dem Ritzel, die einen zweiten rechteckigen Querteilabschnitt aufweist, wobei die Verbindungseinheit durch die erste Öffnung, die zweite Öffnung und die dritte Öffnung hindurch angeordnet ist.

5. Hilfsführungsanordnung nach einem der vorhergehenden Ansprüche, ferner umfassend:
einen Stangenkopf (223), der an einem zweiten Stangenende der hin- und hergehenden Stange angeordnet ist, das dem ersten Stangenende entgegengesetzt ist; und
eine äußere Feder (226), die zwischen dem Stangenkopf und dem Anker angeordnet ist, wobei die äußere Feder dazu konfiguriert ist, den Stangenkopf in eine dritte Richtung zu bewegen, die der ersten Richtung entgegengesetzt ist.

6. Hilfsführungsanordnung nach einem der vorhergehenden Ansprüche, wobei die Verbindungseinheit ferner Folgendes umfasst:
einen Körper (242), der ein erstes Ende, ein zweites Ende und eine erste Seite aufweist, die sich von dem ersten Ende zu dem zweiten Ende erstreckt;
eine erste Öffnung (242a) in dem ersten Ende;
eine zweite Öffnung (242b) in dem zweiten Ende;
einen ersten Sperrstift (244), der in der ersten Öffnung angeordnet ist; und
einen zweiten Sperrstift (246), der in der zweiten Öffnung angeordnet ist, wobei der erste Sperrstift und der zweite Sperrstift dazu konfiguriert sind, mit dem Kopf in Eingriff zu kommen; und optional
wobei der erste Sperrstift (244) einen ersten Abschnitt und einen zweiten Abschnitt aufweist, wobei der erste Abschnitt einen kreisförmigen Querteilabschnitt aufweist und der zweite Abschnitt einen rechteckigen Querteilabschnitt aufweist.

7. Frachtabfertigungssystem, umfassend:
eine Kugelplatte (202) zum Bewegen und Lagern von Fracht, wobei die Kugelplatte eine obere Oberfläche aufweist; und eine Hilfsführungsanordnung (206) nach einem der Ansprüche 2-6, die innerhalb der Kugelplatte angeordnet ist, wobei der Kopf (212) dazu konfiguriert ist, sich über die obere Oberfläche anzuheben und unter diese zurückzuziehen, wenn er in die zweite und vierte Richtung gedreht wird.

8. Frachtabfertigungssystem nach Anspruch 7, ferner umfassend:
eine Benutzerschnittstelle (604);
einen Prozessor, der betriebsmäßig mit der ersten Hilfsführungsanordnung und mit der Benutzerschnittstelle verbunden ist; und
einen Speicher, der betriebsmäßig mit dem Prozessor gekoppelt ist, wobei der Speicher darauf gespeicherte Anweisungen umfasst, die, wenn sie von dem Prozessor ausgeführt werden, den Prozessor zu Folgendem veranlassen:
Empfangen einer ersten Anweisung von der Benutzerschnittstelle; und
Senden einer ersten elektrischen Polarität an die erste Hilfsführungsanordnung als Reaktion auf die erste Anweisung,
wobei sich der Kopf als Reaktion auf die erste elektrische Polarität über die obere Oberfläche erhebt.

9. System nach Anspruch 8, wobei die Anweisungen, wenn sie von dem Prozessor ausgeführt werden, den Prozessor ferner zu Folgendem veranlassen:
Empfangen einer zweiten Anweisung von der Benutzerschnittstelle; und
Senden einer zweiten elektrischen Polarität an die erste Hilfsführungsanordnung als Reaktion auf die zweite Anweisung,
wobei sich der Kopf als Reaktion auf die zweite elektrische Polarität unter die obere Oberfläche zurückzieht, wobei die zweite elektrische Polarität der ersten elektrischen Polarität entgegengesetzt ist.

## Revendications

1. Ensemble de guidage auxiliaire pour une surface de cargaison d'un compartiment de cargaison aérienne, l'ensemble de guidage auxiliaire comprenant :
une tête (212) comprenant une surface de guidage (208a, 208b) et une surface de recouvrement ;
un pignon (218) ;
un moyeu (214) configuré pour recevoir le pignon ;
une unité mixte (216) configurée pour fixer le pignon au moyeu, l'unité mixte étant accouplée en rotation au pignon et à la tête ;
un solénoïde (220) accouplé au moyeu, le solénoïde étant configuré pour recevoir une première polarité électrique ;
une tige (222) animée d'un mouvement de va-et-vient disposée à travers le solénoïde, la tige animée d'un mouvement de va-et-vient ayant une première extrémité de tige comprenant une crémaillère (224) accouplée fonctionnellement au pignon ; et
une armature (230) disposée de manière adjacente au solénoïde et configurée pour venir en prise avec la tige animée d'un mouvement de va-et-vient, dans lequel l'armature est configurée pour se déplacer dans une première direction en réponse à la réception par le solénoïde de la première polarité électrique,
l'armature déplaçant la tige animée d'un mouvement de va-et-vient dans la première direction, et la tête étant configurée pour tourner dans une deuxième direction en réponse au déplacement de tige animée d'un mouvement de va-et-vient dans la première direction.

2. Ensemble de guidage auxiliaire selon la revendication 1, dans lequel le solénoïde (220) est en outre configuré pour recevoir une seconde polarité électrique qui est opposée à la première polarité électrique, dans lequel l'armature (230) est configurée pour se déplacer dans une troisième direction qui est opposée à la première direction en réponse à la réception par le solénoïde de la seconde polarité électrique, et la tête (212) est configurée pour tourner dans une quatrième direction en réponse au déplacement de l'armature dans la deuxième direction, la quatrième direction étant opposée à la deuxième direction.

3. Ensemble de guidage auxiliaire selon la revendication 1 ou 2, comprenant en outre :
un ressort intérieur (228) disposé entre l'armature et le solénoïde, le ressort intérieur étant configuré pour déplacer l'armature dans une troisième direction qui est opposée à la première direction ; et
un aimant annulaire (232) configuré pour maintenir l'armature dans la première position.

4. Ensemble de guidage auxiliaire selon une quelconque revendication précédente, comprenant en outre :
une première ouverture (256) dans la tête ayant une première section transversale rectangulaire ;
une deuxième ouverture (258) dans le moyeu ayant une section transversale circulaire ; et
une troisième ouverture dans le pignon ayant une seconde section transversale rectangulaire, l'unité mixte étant disposée à travers la première ouverture, la deuxième ouverture et la troisième ouverture.

5. Ensemble de guidage auxiliaire selon une quelconque revendication précédente, comprenant en outre :
une tête de tige (223) disposée au niveau d'une seconde extrémité de tige de la tige animée d'un mouvement de va-et-vient qui est opposée à la première extrémité de tige ; et
un ressort extérieur (226) disposé entre la tête de tige et l'armature, dans lequel le ressort extérieur est configuré pour déplacer la tête de tige dans une troisième direction qui est opposée à la première direction.

6. Ensemble de guidage auxiliaire selon une quelconque revendication précédente, l'unité mixte comprenant en outre :
un corps (242) ayant une première extrémité, une seconde extrémité et un premier côté s'étendant de la première extrémité à la seconde extrémité ;
une première ouverture (242a) dans la première extrémité ;
une deuxième ouverture (242b) dans la seconde extrémité ;
une première goupille de verrouillage (244) disposée dans la première ouverture ; et
une seconde goupille de verrouillage (246) disposée dans la deuxième ouverture, dans lequel la première goupille de verrouillage et la seconde goupille de verrouillage sont configurées pour venir en prise avec la tête ; et éventuellement dans lequel la première goupille de verrouillage (244) comporte une première partie et une seconde partie, la première partie ayant une section transversale circulaire et la seconde partie ayant une section transversale rectangulaire.

7. Système de manutention de cargaison, comprenant :
un panneau à billes (202) pour déplacer et stocker la cargaison, le panneau à billes ayant une surface supérieure ; et un ensemble de guidage auxiliaire (206) selon l'une quelconque des revendications 2 à 6 disposé à l'intérieur du panneau à billes, dans lequel la tête (212) est configurée pour s'élever au-dessus et se rétracter en dessous de la surface supérieure lorsqu'elle est tournée dans les deuxième et quatrième directions.

8. Système de manutention de cargaison selon la revendication 7, comprenant en outre :
une interface utilisateur (604) ;
un processeur relié fonctionnellement au premier ensemble de guidage auxiliaire et à l'interface utilisateur ; et
une mémoire couplée fonctionnellement au processeur, la mémoire comprenant des instructions stockées en son sein qui, lorsqu'elles sont exécutées par le processeur, amènent le processeur à :
recevoir une première instruction en provenance de l'interface utilisateur ; et
envoyer une première polarité électrique au premier ensemble de guidage auxiliaire en réponse à la première instruction, la tête s'élevant au-dessus de la surface supérieure en réponse à la première polarité électrique.

9. Système selon la revendication 8, dans lequel les instructions, lorsqu'elles sont exécutées par le processeur, amènent en outre le processeur à :
recevoir une seconde instruction en provenance de l'interface utilisateur ; et
envoyer une seconde polarité électrique au premier ensemble de guidage auxiliaire en réponse à la seconde instruction, la tête se rétractant en dessous de la surface supérieure en réponse à la seconde polarité électrique, la seconde polarité électrique étant opposée à la première polarité électrique.
